# EUROPEAN PATENT SPECIFICATION

(11) **EP 3 465 013 B1**
(45) Date of publication and mention of the grant of the patent: **05.08.2020**
(21) Application number: 16728289.6
(22) Date of filing: 07.06.2016
(51) Int. Cl.: F24C 7/08, F24C 15/20, G06F 3/16, G10L 15/22, G10L 17/00

(54) **COOKING APPLIANCE WITH AN IMPROVED USABILITY AND SAFETY**
KOCHGERÄT MIT VERBESSERTER BENUTZBARKEIT UND SICHERHEIT
APPAREIL DE CUISSON AYANT UNE UTILITÉ ET UNE SÉCURITÉ AMÉLIORÉES

(43) Date of publication of application: 10.04.2019
(73) Proprietor: Arçelik Anonim Sirketi, 34445 Istanbul (TR)
(72) Inventor: KARTAL, Yasar, 34950 Istanbul (TR); IZGEN, Ovunc Doruk, 34950 Istanbul (TR); BUYUKTOPCU, Cagatay, 34950 Istanbul (TR); OZTURK, Erkan, 34950 Istanbul (TR)
(86) International application number: PCT/EP2016/062872
(87) International publication number: WO 2017/211389

(56) References cited:
- WO-A1-2016/028921
- DE-U1-202006 020 206
- JP-A- 2002 333 139
- US-A1- 2015 188 776
- US-A1- 2015 234 364
- US-A1- 2015 336 786

## Description

The present invention relates to a cooking appliance with voice recognition technique.

Cooking appliances with voice recognition technique are commonly known in the art. This type of a cooking appliance generally comprises a cooking unit for cooking the food; a display for displaying information to the user; a microphone for receiving voice data which is sent from the user; and a user-interface unit which controls the cooking unit and the display, listens to the environment through the microphones, and performs voice recognition on the basis of the voice data received by the microphones.

JP2002333139 (A) discloses a prior art oven.

US2015234364 discloses a kitchen appliance with a method includes detecting a user's presence and associating the user's presence with a preference profile for the user, the preference profile comprising a stored setting preference for the kitchen appliance.

US2015336786 discloses an appliance especially a refrigerator including a microphone for receiving a human speech signal and the appliance includes a speech-to-text module configured to convert the human speech signal into textual information. US2015188776 discloses a method of synchronizing with associated electronic devices to have a designated user interface.

WO2016028921 discloses a food preparation system comprising a control knob provided to adjust a characteristic of a cooking environment in a vicinity of the implement during the cooking episode for automated cooking control.

A problem with the prior art oven is that the users encounter difficulties in conducting the cooking.

An objective of the present invention is to provide a cooking appliance that solves the aforementioned problem of the prior art in a cost effective way and which enables an improved usability and safety.

This objective has been achieved by the cooking appliance as defined in claim 1, and the cooking system as defined in claim 10.

Further achievements have been attained by the subject-matters respectively defined in the dependent claims.

In the cooking appliance of the present invention the user-interface unit is further adapted to recognize different users, and to manage for the different users respectively separate personal databases each for storing one or more favorite cooking programs of the respective user, and to allow the user to control the cooking appliance through voice commands.

A major advantageous effect of the present invention is that cooking appliance can be personalized by different users. Thereby the usability of the cooking appliance has been improved. In particular, each user can easily and securely manage his/ her own favorite cooking programs separately from that of the other users. Thereby, each user can quickly access his/her own favorite cooking program, and save time. Another major advantageous effect of the present invention is that the safety of the cooking appliance has been improved as the different users can be recognized. Another major advantageous effect of the present invention is that the user can control the cooking appliance through voice commands. Thereby the users can be relieved from touching the buttons of the user-interface unit, and thus conduct the cooking more easily and quickly.

In an embodiment, the user-interface unit can detect during listening of the environment abnormal occurrences which pose a safety risk to the cooking, and can take appropriate measures. This embodiment is particularly advantageous as the safety of the cooking appliance can be further improved.

In other alternative embodiments, the microphones of the cooking appliance are adapted for attachment into various different positions in the kitchen, preferably at the height of the users. This embodiment is particularly advantageous as the reception of the voice data from various different standpoints of the user can be improved.

In other alternative embodiments, the cooking unit of the cooking appliance comprises one or more cookers and/or an oven. The cooker may comprise one or more electric heaters, one or more gas burners, and/or one or more induction type cooking zones. The oven may be a gas oven, and electric oven and/or a microwave oven.

Additional features and additional advantageous effects of the cooking appliance and the cooking system according to the present invention will become more apparent with the detailed description of the embodiments with reference to the accompanying drawings in which:
Figure 1 - is a schematic perspective view of a cooking system comprising a cooking appliance and an extractor hood according to an embodiment of the present invention, wherein the cooking system has recognized the user, namely "NAME1";
Figure 2 - is a schematic perspective view of the cooking system of Fig. 1, wherein the user has defined a new cooking program;
Figure 3 - is a schematic perspective view of the cooking system of Fig. 1, wherein the user stores a new cooking program;
Figure 4 - is a schematic perspective view of the cooking system of Fig. 1, wherein the cooking appliance listens to the user;
Figure 5 - is a schematic view of the voice recognition process executed by the cooking system of Fig. 1, wherein the cooking appliance recognizes the user, namely "NAME1" through analyzing the received voice data;
Figure 6 - is a schematic view of the voice recognition process executed by the cooking system of Fig. 1, wherein the cooking appliance recognizes the user, namely "NAME2" through analyzing the received voice data;
Figure 7 - is a schematic view of the voice recognition process executed by the cooking system of Fig. 1, wherein the cooking appliance recognizes from the received voice data the voice command, namely "cooker on";
Figure 8 - is a schematic view of the voice recognition process executed by the cooking system of Fig. 1, wherein the cooking appliance recognizes from the received voice data the voice command, namely "cooker off";
Figure 9 - is a schematic perspective view of various extractor hoods of the cooking system respectively according to alternative embodiments of the present invention, wherein the microphones are disposed onto the extractor hood in various different configurations.

The reference signs appearing on the drawings relate to the following technical features.

- 1.: Cooking appliance
- 2.: Cooking unit
- 2a.: Cooker
- 1.: Display
- 2.: Microphone
- 3.: User-interface unit
- 4.: Indication
- 5.: Cooking system
- 6.: Extractor hood
- U:: User

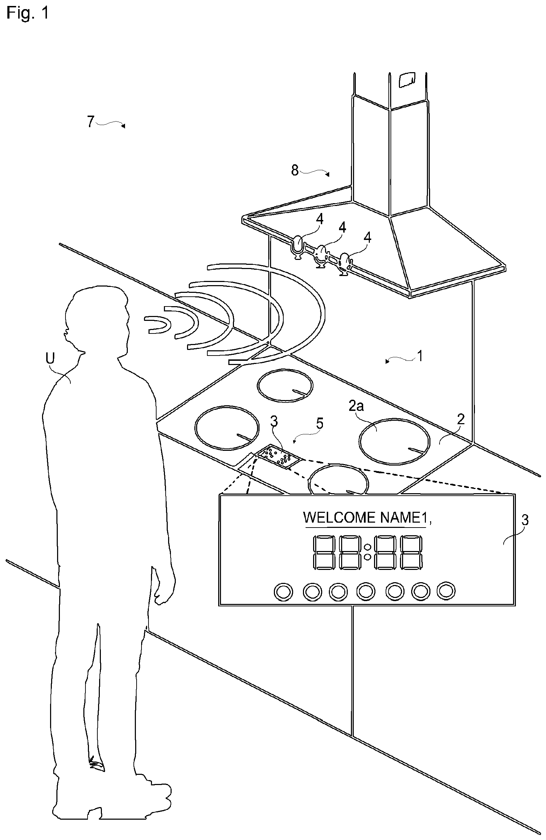

The cooking appliance (1) comprises: a cooking unit (2) for cooking the food; a display (3) for displaying information to the user; one or more microphones (4) for receiving voice data which is sent from the user; a user-interface unit **(5)** which is adapted to control the cooking unit **(2)** and the display **(3)**, to listen to the environment through the microphones **(4)**, and to perform voice recognition on the basis of the voice data received through the microphones **(4)** (Fig. 1).

In the cooking appliance **(1)** of the present invention, the user-interface unit **(5)** is further adapted to recognize different users **(U)**, and to manage for the different users **(U)** respectively separate personal databases each for storing one or more favorite cooking programs of the respective user **(U)**, and to allow the user **(U)** to control the cooking appliance **(1)** through voice commands (Fig. 1).

The cooking system **(7)** of the present invention comprises: the cooking appliance **(1)**; and an extractor hood **(8)** which is arranged above the cooking appliance **(1)**, wherein the user-interface unit **(5)** is further adapted to control the extractor hood **(8)** (Fig. 1 to Fig. 3).

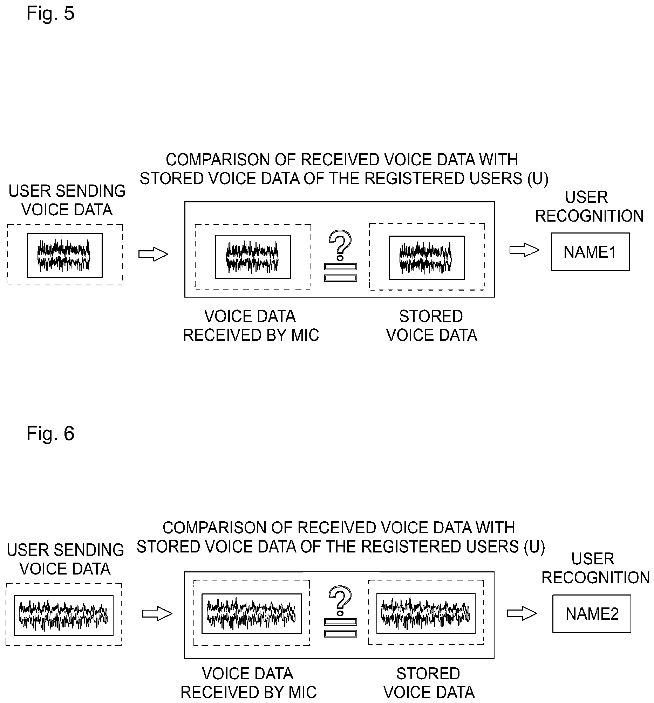

In an embodiment, the user-interface unit **(5)** is further adapted to manage a registry for the different users **(U).** In this embodiment, every user **(U)** must be registered for using the cooking appliance **(1)** per voice commands. The registration can be performed once through the user-interface **(5).** In this embodiment, the user-interface unit **(5)** is further adapted to allow control through the voice commands if the user **(U)** is recognized based on the registry, and to inhibit control through voice commands if the user **(U)** has not been previously registered and to request the user **(U)** to register via the user-interface unit **(5)** (Fig. 5 and Fig. 6). Herein, an analysis is performed in which the voice data sent by the user **(U)** is compared with the voice data of the registered users **(U)** stored in a memory (not shown) of the cooking appliance **(1).** This embodiment is particularly advantageous as the cooking appliance **(1)** can be more safely used by different users **(U).**

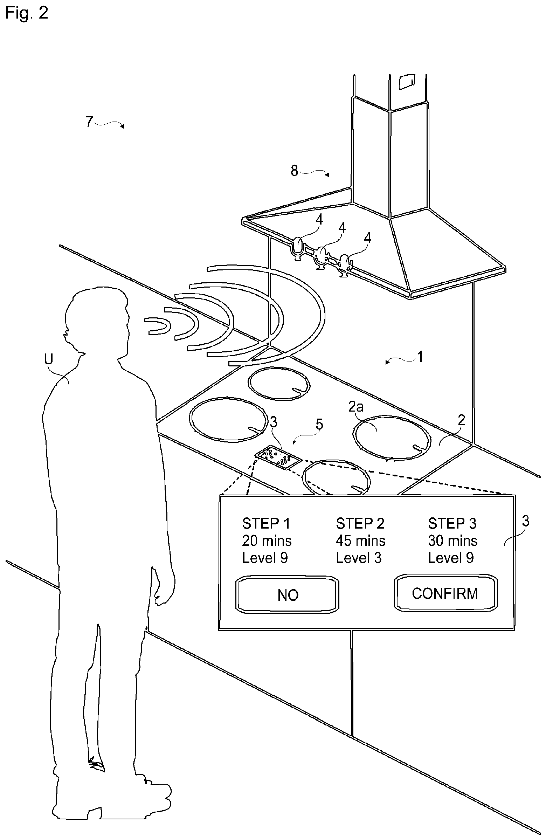

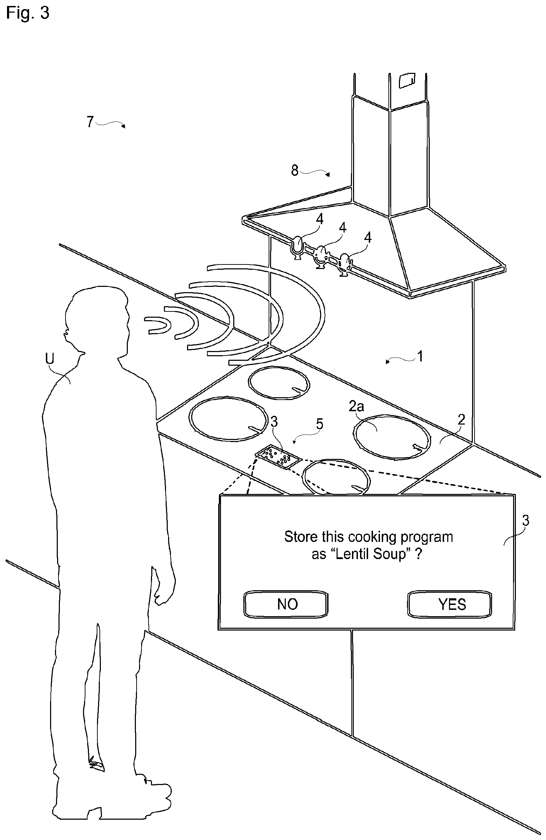

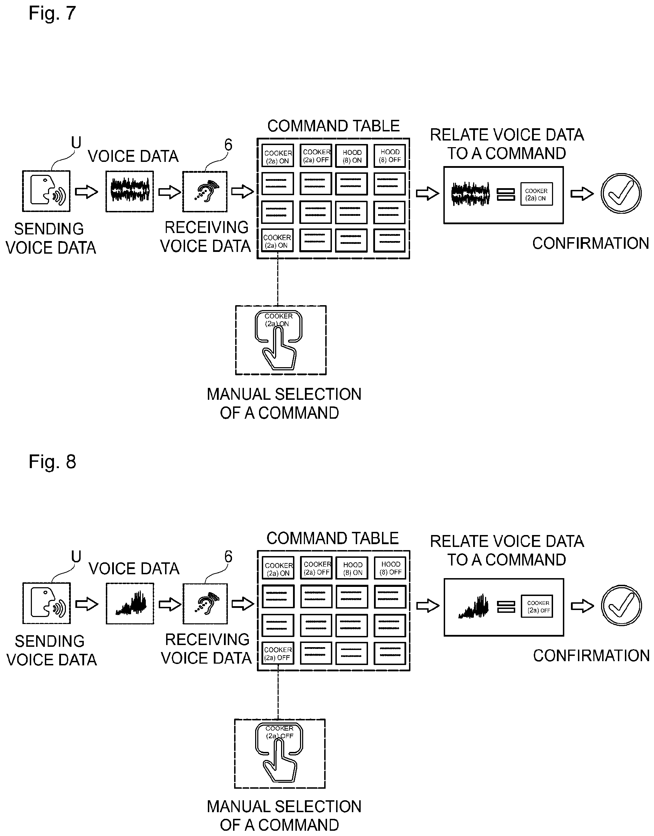

According to the invention, the user-interface unit (5) is adapted to allow the user to define through the voice commands a new cooking program to be executed and, if desired, to store through the voice commands the new cooking program under a name to be specified by the user **(U)**, and/or to recall, through calling its name, a stored cooking program from his/her personal database and have it executed (Fig. 2 and Fig. 3). In this embodiment, the cooking program comprises one or more steps each comprising a cooking period and a cooking level (Fig. 2).In this embodiment, the user **(U)** can store the new cooking program for instance at the beginning of the cooking or at the end of the cooking. In this embodiment, the user **(U)** can start execution of the new/recalled cooking program through a voice command (Fig. 7 and Fig. 8). This embodiment is particularly advantageous as two different users **(U)** can define/store/recall two different cooking programs with the same name, for instance "lentil soup". Thereby, the users **(U)** can cook, for example, the lentil soup in different ways.

In another embodiment, the user can also manually control the cooking appliance **(1)** (Fig. 7 and Fig. 8). This embodiment is particularly advantageous as the cooking can be conducted without speaking to the cooking appliance **(1).**

In another embodiment, the user-interface unit **(5)** is adapted to visually or audibly provide information on the identity of the user **(U)** and/or on the new cooking program to be executed, or the new cooking program to be stored, or the recalled cooking program to be executed (Fig. 1 to 3). In this embodiment, the visual information is presented through the display **(3).** In this embodiment, the audible information is provided through a loud speaker (not shown) or headphone (not shown). This embodiment is particularly advantageous as the intelligibility can be improved, and the user **(U)** can conduct the cooking more easily.

In another embodiment, the microphone **(4)** is disposed onto a wireless headphone. This embodiment is particularly advantageous as the user can freely move in the kitchen.

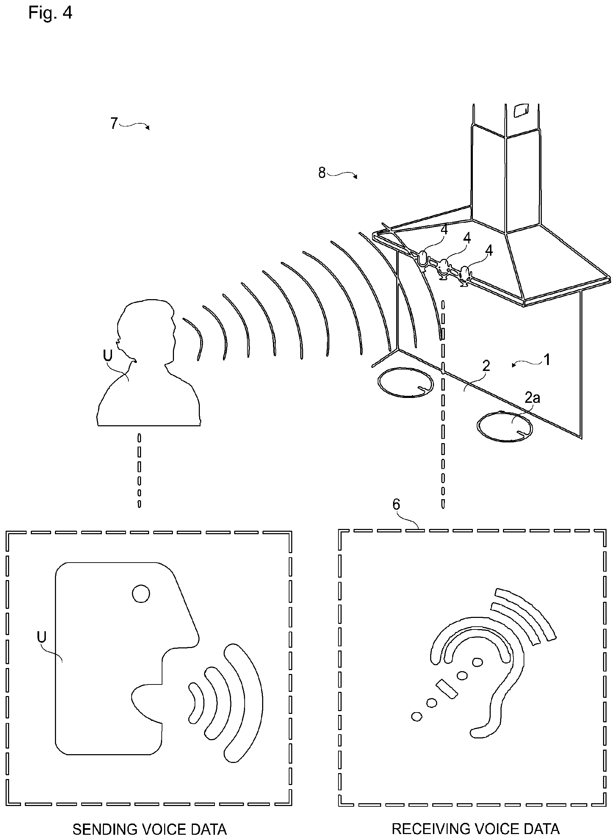

In another embodiment, the user-interface unit **(5)** is further adapted to start executing the voice commands of the user **(U)** when the voice level thereof exceeds a predetermined level during listening of the environment and/or when the user **(U)** speaks a keyword such as a human name to the cooking appliance **(1)** or a password assigned to the cooking appliance **(1)** (Fig. 4). This embodiment is particularly advantageous as the interaction between the user **(U)** and the cooking appliance **(1)** can be improved.

In another embodiment, the user-interface unit **(3)** is adapted to display an indication **(6)** on the display **(3)** when it listens to the environment through the microphones **(4)** (Fig.4). In this embodiment, the indication **(6)** may be an icon or an animation. This embodiment is particularly advantageous as the interaction between the user **(U)** and the cooking appliance **(1)** can be further improved.

In another embodiment, the user-interface unit **(5)** is further adapted to determine whether the user **(U)** is an infant/child based on the received voice data during listening of the environment, and at least partly or entirely to inhibit control through voice commands if the user is determined as an infant/child. This embodiment is particularly advantageous as the safety of the cooking appliance **(1)** can be further improved.

In another embodiment, the cooking appliance **(1)** further comprises a transmitting unit (not shown) for transmitting information on the identity of the recognized user **(U)** to one or more other nearby electrical appliances (not shown). In this embodiment, the nearby electrical appliance of the cooking system **(7)** is located in the same room/kitchen, and adapted to personalize itself on the basis of the transmitted information so as to display a screen which relates to that user **(U).** This embodiment is particularly advantageous as the user **(U)** can smoothly use the other electrical appliances.

In another embodiment, the cooking appliance **(1)** further comprises: a loudspeaker (not shown) or a headphone (not shown) for sending a voice feedback to the user **(U)**, wherein the user-interface unit **(5)** is adapted to control the loudspeaker. For instance, the cooking appliance **(1)** can provide a positive feedback when the user **(U)** is respectively recognized (Fig. 1). Similarly, the cooking appliance **(1)** can provide a negative feedback when the user **(U)** is respectively not recognized, and further ask the user **(U)** to register via the user-interface unit **(5).** This embodiment is particularly advantageous as the interaction between the user **(U)** and the cooking appliance **(1)** can be further improved.

In another embodiment, the user-interface unit **(5)** is further adapted to play a song based on the tone of the voice commands send by the user **(U).** This embodiment is particularly advantageous as the user can save time and labor in finding a song that matches his/her mood, and thus continues cooking without being distracted.

In another embodiment, the user-interface unit **(5)** is further adapted to detect during listening of the environment on the basis of the received voice data an abnormal occurrence which poses a safety risk to the cooking, and to interrupt or to terminate the cooking in case of an abnormal occurrence (Fig. 4). This embodiment is particularly advantageous as the safety of the cooking appliance **(1)** can be further improved.

In another embodiment, the abnormal occurrences comprises: one of the following occurrences: glass breakage, falling of a person or the user **(U)**; and gas leakage. This list is not exhaustive. Other abnormal occurrences which pose a safety risk to the cooking may also be detected.

In another embodiment, the user-interface unit **(5)** comprises a communication unit (not shown); and the user-interface unit **(5)** is further adapted to audibly and/or visually ask the user whether to continue the cooking or not after the cooking has been interrupted due to an abnormal occurrence, and to continue the cooking or to terminate the cooking based on the answer of the user **(U)**, and to inform the local authorities such as an emergency service through the communication unit in case of a negative answer from the user **(U)** or in the absence of an answer. This embodiment is particularly advantageous as the safety of the cooking appliance **(1)** can be further improved, and thus more serious accidents can be prevented at an early stage.

In another embodiment, the cooking unit **(2)** of the cooking appliance **(1)** comprises one or more cookers **(2a)** (Fig. 1 to 4).

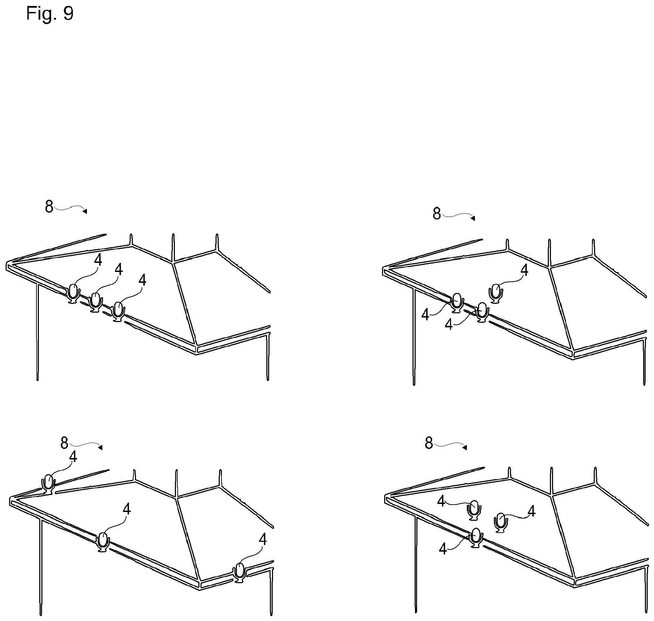

In other alternative embodiments, the microphones **(4)** are disposed onto the extractor hood **(8)** in various different configurations (Fig. 9). In an embodiment, one microphone **(4)** is disposed on each of the three sides of the extractor hood **(8).** In another embodiment, three microphones **(4)** are disposed into one or more arrays on the front side of the extractor hood **(8)** This embodiment is particularly advantageous as the reception of the voice data from various different standpoints of the user **(U)** can be improved.

A major advantageous effect of the present invention is that cooking appliance **(1)** can be personalized by different users **(U)** (Fig.1, Fig. 5 and Fig. 6). Thereby the usability of the cooking appliance **(1)** has been improved. In particular, each user **(U)** can easily and securely manage his/her own favorite cooking programs separately from that of the other users (Fig. 2 and Fig 3). Thereby, each user **(U)** can quickly access his/her own favorite cooking program, and save time (Fig. 1 and Fig. 2). Another major advantageous effect of the present invention is that the safety of the cooking appliance **(1)** has been improved as the different users **(U)** can be recognized (Fig. 1). Another major advantageous effect of the present invention is that the user **(U)** can control the cooking appliance **(1)** through voice commands. Thereby the users **(U)** can be relieved from touching the buttons of the user-interface unit **(5)**, and thus conduct the cooking more easily and quickly.

## Claims

1. A cooking appliance **(1)** comprising:
a cooking unit **(2)** for cooking the food;
a display **(3)** for displaying information to the user;
one or more microphones **(4)** for receiving voice data which is sent from the user **(U)**;
a user-interface unit **(5)** which is adapted to control the cooking unit **(2)** and the display **(3)**, to listen to the environment through the microphones **(4)**, and to perform voice recognition on the basis of the voice data received through the microphones **(4)**, and the user-interface unit **(5)** is further adapted to recognize different users **(U)**, and to manage for the different users **(U)** respectively separate personal databases each for storing one or more favorite cooking programs of the respective user **(U)**, and to allow the user **(U)** to control the cooking appliance **(1)** through voice commands and **characterized in that**, the user-interface unit (5) is programmed to allow the user to define through the voice commands a new cooking program to be executed and, if desired, to store through the voice commands the new cooking program under a name to be specified by the user (U), and/or to recall, through calling its name, a stored cooking program from his/her personal database and have it executed, wherein the cooking program comprises one or more steps each comprising a cooking period and a cooking level.

2. The cooking appliance **(1)** according to claim 1, **characterized in that** the user-interface unit **(5)** is further adapted to manage a registry for the different users **(U)**, and to allow control through the voice commands if the user **(U)** is recognized based on the registry, and to inhibit control through voice commands if the user **(U)** has not been previously registered and to request the user **(U)** to register via the user-interface unit **(5).**

3. The cooking appliance **(1)** according to claim 1, **characterized in that** the user-interface unit **(5)** is adapted to visually or audibly provide information on the identity of the user **(U)** and/or on the new cooking program to be executed, or the new cooking program to be stored, or the recalled cooking program to be executed.

4. The cooking appliance **(1)** according to any one of claims 1 to 3, **characterized in that** the user-interface unit **(5)** is further adapted to start executing the voice commands when the voice level thereof exceeds a predetermined level during listening of the environment and/or when the user **(U)** speaks a keyword.

5. The cooking appliance **(1)** according to any one of claims 1 to 4, **characterized in that** the user-interface unit **(3)** is adapted to display an indication **(6)** on the display **(3)** when it listens to the environment through the microphones **(4).**

6. The cooking appliance **(1)** according to any one of claims 1 to 5, **characterized in that** the user-interface unit **(5)** is further adapted to determine whether the user **(U)** is an infant/child based on the received voice data during listening of the environment, and at least partly or entirely to inhibit control through voice commands if the user is determined as an infant/child.

7. The cooking appliance **(1)** according to any one of claims 1 to 6, **characterized by** further comprising a transmitting unit for transmitting information on the identity of the recognized user **(U)** to one or more other nearby electrical appliances.

8. The cooking appliance **(1)** according to any one of claims 1 to 7, **characterized by** further comprising: a loudspeaker for sending a voice feedback to the user **(U)**, wherein the user-interface unit **(5)** is adapted to control the loudspeaker.

9. The cooking appliance **(1)** according to claim 8, **characterized in that** the user-interface unit **(5)** is further adapted to play a song based on the tone of the voice commands which is sent by the user **(U).**

10. A cooking system **(7) characterized by** comprising: the cooking appliance **(1)** as defined in any one of claims 1 to 9; and an extractor hood **(8)** which is arranged above the cooking appliance **(1)**, wherein the user-interface unit **(5)** is further adapted to control the extractor hood **(8).**

11. The cooking system **(7)** according to claim 10, **characterized in that** the microphones **(4)** are disposed onto the extractor hood **(8)**.

## Patentansprüche

1. Ein Kochgerät **(1)** umfasst, eine Kocheinheit **(2),** für das Kochen von Speisen, eine Anzeige **(3)** zum Anzeigen von Informationen für den Benutzer; ein oder mehrere Mikrofone **(4)** zum Empfangen von Sprachdaten, die vom Benutzer **(U)** gesendet werden; eine Benutzerschnittstelleneinheit **(5)**, die die Kocheinheit **(2)** und die Anzeige **(3)** steuert, die Umgebung über die Mikrofone **(4)** hört und eine Spracherkennung auf der Basis der Sprachdaten durchführt um die Daten über die Mikrofone **(4)** zu empfangen, darüber hinaus ist die Benutzerschnittstelleneinheit **(5)** dazu angepasst, verschiedene Benutzer **(U)** zu erkennen und für verschiedene Benutzer **(U)** jeweils separate und individuelle Datenbanken zu verwalten, um jeweils ein oder mehrere Favoritkochprogramme des jeweiligen Benutzers **(U)** zu speichern und dem Benutzer **(U)** zu ermöglichen, dass er das Kochgerät **(1)** über Sprachbefehle steuert, **gekennzeichnet ist es dadurch**, dass die Benutzerschnittstelleneinheit **(5)** so programmiert ist, dass der Benutzer durch die Sprachbefehle ein neues Kochprogramm definieren kann, das ausgeführt werden soll, und, falls erwünscht, um über die Sprachbefehle das neue Kochprogramm unter einem vom Benutzer **(U)** zu spezifizierenden Namen zu speichern und / oder durch Aufrufen seines Namens ein gespeichertes Kochprogramm aus seiner persönlichen Datenbank abzurufen und ausführen zu lassen, wobei das Kochprogramm einen oder mehrere Schritte umfasst, die jeweils eine Kochperiode und eine Kochstufe umfassen.

2. Das Kochgerät **(1)**, wie in Anspruch 1 aufgeführt, **ist dadurch gekennzeichnet, dass** die Benutzerschnittstelleneinheit **(5)** dazu angepasst ist, eine Registrierung für die verschiedenen Benutzer **(U)** zu verwalten und eine Steuerung über Sprachbefehle zu ermöglichen, wenn der Benutzer **(U)** anhand der Registrierung erkannt wird; und um die Steuerung durch Sprachbefehle zu sperren, wenn der Benutzer **(U)** zuvor nicht registriert wurde, und um den Benutzer **(U)** aufzufordern, sich über die Benutzerschnittstelleneinheit **(5)** zu registrieren.

3. Das Kochgerät **(1)**, wie in Anspruch 1 aufgeführt, **ist dadurch gekennzeichnet, dass** die Benutzereschnittstelleneinheit **(5)** so ausgelegt ist, dass sie visuell als auch akustisch Informationen über die Identität des Benutzers **(U)** und / oder über das neu auszuführende Kochprogramm liefert oder das neu aufzuzeichnenden Kochprogramm oder das zurückgerufene Kochprogramm, welches ausgeführt werden soll.

4. Das Kochgerät **(1)**, wie in den Ansprüchen 1 bis 3 aufgeführt, **ist dadurch gekennzeichnet, dass** die Benutzerschnittstelleneinheit **(5)** weiterhin dazu angepasst ist, die Ausführung der Sprachbefehle zu starten, wenn deren Sprachpegel während des Abhörens der Umgebung einen vorbestimmten Pegel überschreitet und / oder wenn der Benutzer **(U)** ein Schlüsselwort spricht.

5. Das Kochgerät **(1)**, wie in den Ansprüchen 1 bis 4 aufgeführt, **ist dadurch gekennzeichnet, dass** die Benutzerschnittstelleneinheit **(3)** eine Anzeige **(6)** auf dem Display **(3)** anzeigt, wenn sie über die Mikrofone **(4)** auf die Umgebung hört.

6. Das Kochgerät **(1)**, wie in den Ansprüchen 1 bis 5 aufgeführt, **ist dadurch gekennzeichnet, dass** die Benutzerschnittstelle **(5)** darüber hinaus dazu angepasst ist, um zu bestimmen, ob der Benutzer **(U)** ein Säugling / Kind ist, basierend auf den empfangenen Sprachdaten während des Abhörens der Umgebung, und zumindest teilweise oder vollständig, um die Steuerung durch Sprachbefehle zu verhindern, wenn die Benutzer als ein Säugling / Kind bestimmt wird.

7. Das Kochgerät **(1)**, wie in den Ansprüchen 1 bis 6 aufgeführt, **ist dadurch gekennzeichnet, dass** es des Weiteren eine Sendeeinheit umfasst, für das Übertragen von Informationen über die Identität des erkannten Benutzers **(U)** an ein oder mehrere andere in der Nähe befindliche Elektrogeräte.

8. Das Kochgerät **(1)**, wie in den Ansprüchen 1 bis 7 aufgeführt, **ist dadurch gekennzeichnet, dass** es des Weiteren Lautsprecher umfasst, der für das Senden einer Sprachrückmeldung an den Benutzer **(U)** geeignet ist, wobei die Benutzerschnittstelleneinheit **(5)** zur Steuerung des Lautsprechers angepasst ist.

9. Das Kochgerät **(1)**, wie in Anspruch 8 aufgeführt, **ist dadurch gekennzeichnet, dass** die Benutzerschnittstelleneinheit **(5)** dazu angepasst ist, ein Lied abzuspielen, der auf den Ton der Sprachbefehle basiert, die vom Benutzer **(U)** gesendet werden.

10. Ein Kochsystem **(7) ist gekennzeichnet durch:** das Kochgerät **(1)**, nach einem der Ansprüche 1 bis 9; und eine Dunstabzugshaube **(8)**, die über dem Kochgerät **(1)** angeordnet ist, wobei die Benutzerschnittstelleneinheit **(5)** auch zur Steuerung der Dunstabzugshaube **(8)** angepasst ist.

11. Ein Kochsystem **(7)** nach Anspruch 10, **ist dadurch gekennzeichnet, dass** die Mikrofone **(4)** auf der Dunstabzugshaube **(8)** angeordnet sind.

## Revendications

1. Un appareil de cuisson **(1)** comprenant :
une unité de cuisson **(2)** pour la cuisson des aliments ;
un écran **(3)** pour afficher des informations à l'utilisateur ;
un ou plusieurs microphones **(4)** pour recevoir les données vocales qui sont envoyées par l'utilisateur **(U)** ;
une unité d'interface utilisateur **(5)** qui est adaptée pour commander l'unité de cuisson **(2)** et l'écran **(3),** pour écouter l'environnement par l'intermédiaire des microphones **(4)** et pour effectuer une reconnaissance vocale sur la base des données vocales reçues par les microphones **(4)**, et l'unité d'interface utilisateur **(5)** est en outre adaptée pour reconnaître différents utilisateurs **(U)** et pour gérer selon les différents utilisateurs **(U)** des bases de données personnelles séparées correspondantes, chacune pour stocker un ou plusieurs programmes de cuisson préférés de l'utilisateur **(U)** concerné, et pour permettre à l'utilisateur **(U)** de commander l'appareil de cuisson **(1)** par des commandes vocales et **est caractérisé en ce que** l'unité d'interface utilisateur **(5)** est programmée pour permettre à l'utilisateur de définir par les commandes vocales un nouveau programme de cuisson à exécuter et, si on le souhaite, de stocker par les commandes vocales le nouveau programme de cuisson sous un nom à spécifier par l'utilisateur **(U)**, et/ou de rappeler, en appelant son nom, un programme de cuisson stocké à partir de sa base de données personnelle et de le faire exécuter, dans lequel le programme de cuisson comprend une ou plusieurs étapes comprenant chacune une période de cuisson et un niveau de cuisson.

2. L'appareil de cuisson **(1)** selon la déclaration 1, est **caractérisé en ce que** l'unité d'interface utilisateur **(5)** est en outre adaptée pour gérer un registre pour les différents utilisateurs **(U)**, et pour permettre le contrôle par les commandes vocales si l'utilisateur **(U)** est reconnu sur la base du registre, et pour inhiber le contrôle par les commandes vocales si l'utilisateur **(U)** n'a pas été enregistré précédemment et pour demander à l'utilisateur **(U)** de s'enregistrer via l'unité d'interface utilisateur **(5).**

3. L'appareil de cuisson **(1)** selon la déclaration 1, est **caractérisé en ce que** l'unité d'interface utilisateur **(5)** est adaptée pour fournir visuellement ou auditivement des informations sur l'identité de l'utilisateur **(U)** et/ou sur le nouveau programme de cuisson à exécuter, ou le nouveau programme de cuisson à stocker, ou le programme de cuisson rappelé à exécuter.

4. L'appareil de cuisson **(1)** selon l'une quelconque des déclarations 1 à 3, est **caractérisé en ce que** l'unité d'interface utilisateur **(5)** est en outre adaptée pour commencer à exécuter les commandes vocales lorsque son niveau vocal dépasse un niveau prédéterminé pendant l'écoute de l'environnement et/ou lorsque l'utilisateur **(U)** prononce un mot clé.

5. L'appareil de cuisson **(1)** selon l'une quelconque des déclarations 1 à 4, est **caractérisé en ce que** l'unité d'interface utilisateur **(3)** est adaptée pour afficher une indication **(6)** sur l'écran **(3)** lorsqu'elle écoute l'environnement par le biais des microphones **(4).**

6. L'appareil de cuisson **(1)** selon l'une quelconque des déclarations 1 à 5, est **caractérisé en ce que** l'unité d'interface utilisateur **(5)** est en outre adaptée pour déterminer si l'utilisateur **(U)** est un nourrisson/enfant sur la base des données vocales reçues pendant l'écoute de l'environnement, et au moins partiellement ou entièrement pour inhiber le contrôle par des commandes vocales si l'utilisateur est déterminé comme étant un nourri sson/enfant.

7. L'appareil de cuisson **(1)** selon l'une quelconque des déclarations 1 à 6, est **caractérisé en ce qu'**il comprend en outre une unité de transmission pour transmettre des informations sur l'identité de l'utilisateur reconnu **(U)** à un ou plusieurs autres appareils électriques situés à proximité.

8. L'appareil de cuisson **(1)** selon l'une quelconque des déclarations 1 à 7, est **caractérisé en ce qu'**il comprend en outre : un haut-parleur pour envoyer un retour vocal à l'utilisateur **(U)**, dans lequel l'unité d'interface utilisateur **(5)** est adaptée pour commander le haut-parleur.

9. L'appareil de cuisson **(1)** selon la déclaration 8, est **caractérisé en ce que** l'unité d'interface utilisateur **(5)** est en outre adaptée pour jouer une chanson basée sur le ton des commandes vocales qui sont envoyées par l'utilisateur **(U).**

10. Un système de cuisson **(7)** est **caractérisé en ce qu'**il comprend : l'appareil de cuisson **(1)** tel que défini dans l'une quelconque des déclarations 1 à 9 ; et une hotte aspirante **(8)** qui est disposée au-dessus de l'appareil de cuisson **(1)**, dans lequel l'unité d'interface utilisateur **(5)** est en outre adaptée pour commander la hotte aspirante **(8).**

11. Le système de cuisson **(7)** selon la déclaration 10, est **caractérisé en ce que** les microphones **(4)** sont disposés sur la hotte aspirante **(8).**
